**Europäisches Patentamt**

(19) **European Patent Office**

**Office européen des brevets**

(11) Veröffentlichungsnummer: **0 050 858**
**B1**

(12) **EUROPÄISCHE PATENTSCHRIFT**

(45) Veröffentlichungstag der Patentschrift:
**12.10.83**

(51) Int. Cl.³: **F 24 J 3/02**

(21) Anmeldenummer: **81108802.0**

(22) Anmeldetag: **23.10.81**

(54) **Wärmeabsorber.**

(30) Priorität: **28.10.80 DE 3040510**

(43) Veröffentlichungstag der Anmeldung:
**05.05.82 Patentblatt 82/18**

(45) Bekanntmachung des Hinweises auf die Patenterteilung:
**12.10.83 Patentblatt 83/41**

(84) Benannte Vertragsstaaten:
**AT BE CH DE FR GB IT LI LU NL SE**

(56) Entgegenhaltungen:
**AT-A-361 741**
**DE-A-3 010 101**
**FR-A-613 175**
**GB-A-930 991**
**GB-A-2 062 838**

(73) Patentinhaber: **HOECHST AKTIENGESELLSCHAFT,**
**Postfach 80 03 20, D-6230 Frankfurt am Main 80 (DE)**

(72) Erfinder: **Brass, Holger, Blumenstrasse 32,**
**D-6251 Waldbrunn (DE)**
Erfinder: **Braunisch, Herbert, Dr., Nelkenweg 8,**
**D-6238 Hofheim am Taunus (DE)**
Erfinder: **Disselbeck, Dieter, Am Rehsteig 3, D-6232 Bad**
**Soden am Taunus (DE)**
Erfinder: **Golly, Helmut, Dr., Am Schieferberg 17,**
**D-6233 Kelkheim (Taunus) (DE)**

## Wärmeabsorber

Die Erfindung betrifft einen Umgebungsluft-Wärmeabsorber bestehend aus mehreren flächigen Wärmeaustauscherelementen, die übereinander angeordnet jeweils einen Zwischenraum bilden, und einem die Wärmeaustauscherelemente haltenden Rahmen.

Zur Beheizung von Gebäuden gewinnen Wärmepumpen-Heizsysteme an Bedeutung, die als Wärmequelle u.a. die Umgebungsluft nutzbar machen. Hierbei wird über ein Umgebungsluft-Wärmeabsorber, der von einem gegenüber der Aussenlufttemperatur kälteren Wärmeübertragermedium durchströmt ist, der windbewegten Luft Wärme entzogen. Diese Wärme mit Umgebungstemperatur wird mit Hilfe der Wärmepumpe unter Einsatz zumeist elektrischer Energie genutzt, um Heizwärme auf dem gewünschten Temperaturniveau zur Verfügung zu stellen.

Bekannt sind Umgebungsluft-Wärmeabsorber mit mehreren plattenförmigen Wärmeaustauscherelementen, die in einem Rahmen übereinander mit Abstand angeordnet sind oder parallel zueinander im Rahmen hängend angeordnet sind. Sie werden auch als Energie-Stapel, Energie-Fächer oder Energie-Box bezeichnet.

Bei all diesen Ausführungen ist der Wärmegewinn im wesentlichen von der Windgeschwindigkeit abhängig. Es hat sich gezeigt, dass sich bei den parallel in einem bestimmten Abstand angeordneten Wärmeaustauscherflächen an deren Oberfläche eine laminare Strömung einstellt, die für den optimalen Wärmeübergang nachteilig ist.

Darüber hinaus haben im wesentlichen horizontal angeordnete Wärmeaustauscherflächen den Nachteil, dass das Kondensat aus der Luftfeuchtigkeit, welches bei Wärmeentzug entsteht, nicht sofort abgeführt wird und somit bei Verdunstung dem System wieder Wärme entzieht.

Die Aufgabe besteht darin, diese Mängel durch konstruktive Massnahmen zu beseitigen.

Die Aufgabe wird durch die Erfindung dadurch gelöst, dass mindestens an einer Aussen-Oberfläche der Wärmeaustauscherelemente ein Gitternetz angeordnet ist. Diese Gitternetze können sowohl aus metallischen Werkstoffen als auch aus Kunststoffen bestehen. Dadurch wird überraschenderweise erreicht, dass sich der Wärmegewinn deutlich erhöht, was unter anderem darauf zurückzuführen ist, dass sich an der Aussen-Oberfläche der Wärmeaustauscherelemente eine Turbulenz ausbildet, die sich vorteilhaft auf den Wärmeübergang auswirkt.

Gitternetze sind offene Gewebe oder Netze, aber auch andere strukturierte, durchbrochene Flächengebilde.

Es wurde gefunden, dass bei einer Windgeschwindigkeit von 1 m/s, einer Lufttemperatur von +4°C, einer mittleren Wärmeträgermediumtemperatur von −1°C und einer relativen Luftfeuchtigkeit von 50% der Wärmegewinn um etwa 60% gesteigert werden konnte, wenn erfindungsgemäss jedes Wärmeaustauscherelement mit einem Gitternetz auf beiden Seiten belegt wurde.

Es hat sich weiterhin gezeigt, dass die Ableitung des Kondensats sichergestellt ist, wenn das Wärmeaustauscherelement mit an seiner Aussen-Oberfläche befindlichen Gitternetz im Rahmen mit einer Neigung von 5 bis 7° zur Horizontalen angeordnet ist.

Eine vorteilhafte Ausführung der Erfindung wird erreicht, wenn die Wärmeaustauscherelemente zwischen zwei Gitternetzen lose eingelegt sind und die Gitternetze am Rahmen befestigt sind.

Auf diese Weise unterliegen die Wärmeaustauscherelemente keinen wechselnden Beanspruchungen durch Zugkräfte, die durch temperaturbedingte Längenänderungen entstehen.

Es hat sich auch gezeigt, dass der Abstand der parallel zueinander angeordneten Wärmeaustauscherelemente hinsichtlich des energistischen Wirkungsgrades von Bedeutung ist. Bei natürlicher Windbewegung ist ein Abstand der Wärmeaustauscherelemente von 10 bis 30 cm optimal.

Als Wärmeaustauscherelement finden beispielsweise solche nach der deutschen Offenlegungsschrift 2 714 901 Anwendung.

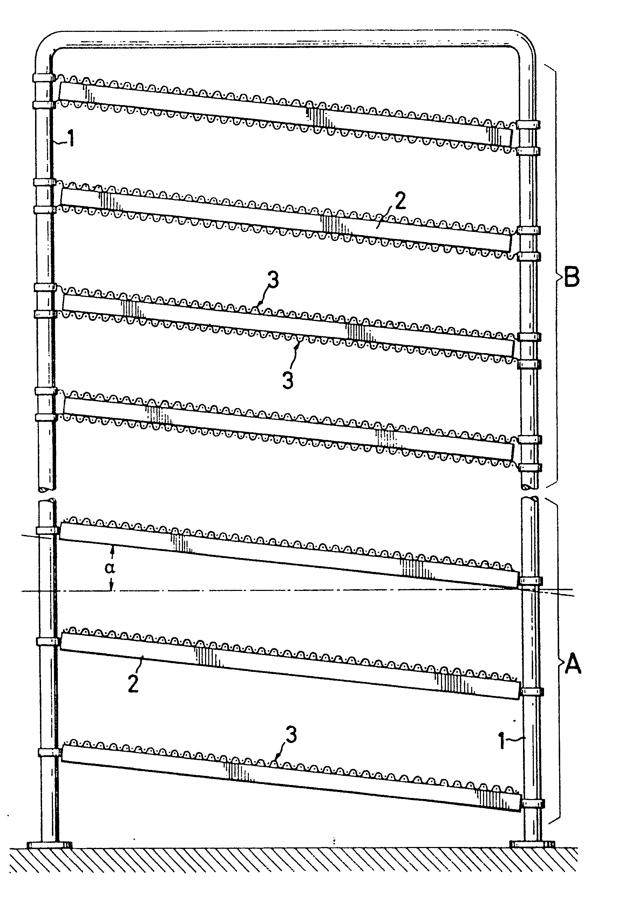

In der Figur ist die Ausführung des erfindungsgemässen Umgebungsluft-Wärmeabsorbers dargestellt. Darin bedeuten (1) Rahmenkonstruktion, (2) Wärmeaustauscherelemente , (3) Gitternetz.

Die Figur zeigt den erfindungsgemässen Wärmeabsorber in einer Seitenansicht. Teil A stellt die Ausführungsform mit eingespanntem Wärmeaustauscherelement (2) und aufgelegtem Gitternetz (3) dar; in Teil B sind die Gitternetze im Rahmen (1) eingespannt und das Wärmeaustauscherelement (2) ist eingelegt.

## Patentansprüche

1. Umgebungsluft-Wärmeabsorber, bestehend aus mehreren flächigen Wärmeaustauscherelementen (2), die übereinander angeordnet jeweils einen Zwischenraum bilden und einem die Wärmeaustauscherelemente (2) haltenden Rahmen (1), dadurch gekennzeichnet, dass mindestens auf einer Aussen-Oberfläche der Wärmeaustauscherelemente (2) ein Gitternetz (3) angeordnet ist.

2. Umgebungsluft-Wärmeabsorber nach Anspruch 1, dadurch gekennzeichnet, dass die einzelnen Wärmeaustauscherelemente (2) parallel zueinander in einem Winkel von 5 bis 7° zur Horizontalen angeordnet sind.

3. Umgebungsluft-Wärmeabsorber nach Anspruch 1, dadurch gekennzeichnet, dass die Wärmeaustauscherelemente (2) zwischen Gitternetzen (3) eingelegt sind und die Gitternetze (3) am Rahmen (1) befestigt sind.

4. Umgebungsluft-Wärmeabsorber nach den Ansprüchen 1 bis 3, dadurch gekennzeichnet, dass der Abstand zwischen den Wärmeaustauscherelementen (2) mindestens 10 und höchstens 30 cm beträgt.

## Claims

1. Ambient-air heat absorber composed of several plane heat exchanger elements (2) arranged one above another and forming an intermediate space in each case, and of a frame (1) holding the heat exchanger elements (2), characterized in that a lattice grid (3) is arranged at least on one outer surface of the heat exchanger elements (2).

2. An ambient-air heat absorber as claimed in claim 1, characterized in that the individual heat exchanger elements (2) are arranged parallel to one another at an angle of 5 to 7° to the horizontal.

3. An ambient-air heat absorber as claimed in claim 1, characterized in that the heat exchanger elements (2) are inserted between lattice grids (3) and the lattice grids (3) are fastened to the frame (1).

4. An ambient-air heat absorber as claimed in any of claims 1 to 3, characterized in that the distance between the heat exchanger elements (2) is at least 10 and at most 30 cm.

## Revendications

1. Absorbeur de chaleur pour l'air ambiant, constitué par plusieurs éléments d'échangeur de chaleur plans (2) placés les uns au-dessus des autres en formant un espace intermédiaire, et par un châssis (1) supportant les éléments d'échangeur de chaleur (2), caractérisé en ce qu'il y a un treillis (3) au moins sur une surface extérieure des éléments d'échangeur de chaleur (2).

2. Absorbeur de chaleur pour l'air ambiant selon la revendication 1, caractérisé en ce que les différents éléments d'échangeur de chaleur (2) sont parallèles les uns aux autres et forment un angle d'environ 5 à 7° avec l'horizontale.

3. Absorbeur de chaleur pour l'air ambiant selon la revendication 1, caractérisé en ce que les éléments d'échangeur de chaleur (2) sont posés entre des treillis (3) et que les treillis (3) sont fixés au châssis (1).

4. Absorbeur de chaleur pour l'air ambiant selon les revendications 1 à 3, caractérisé en ce que l'écartement des éléments d'échangeur de chaleur (2) est d'un moins 10 cm, d'au plus 30 cm.